# EUROPEAN PATENT SPECIFICATION

(11) **EP 0 142 149 B1**
(45) Date of publication and mention of the grant of the patent: **01.02.1995**
(21) Application number: 84113629.4
(22) Date of filing: 12.11.1984
(51) Int. Cl.: C08G 73/10, G09G 3/00, C08G 73/16

(54) **Use of fluorine containing polyimides for aligning layers of liquid crystal display devices.**
Verwendung fluorhaltiger Polyimide für Orientierungsschichten von Flüssigkristall-Anzeigevorrichtungen.
Utilisation de polyimides contenant du fluor pour des couches d'orientation de dispositifs d'affichage à cristaux liquides.

(30) Priority: 11.11.1983 JP 211075/83
(43) Date of publication of application: 22.05.1985
(73) Proprietor: HITACHI, LTD., Chiyoda-ku, Tokyo 100 (JP); Hitachi Chemical Co., Ltd., Shinjuku-ku, Tokyo 160 (JP)
(72) Inventor: Numata, Shunichi, Hitachi-shi (JP); Fujisaki, Koji, Hitachi-shi (JP); Kinjo, Noriyuki, Hitachi-shi (JP)
(74) Representative: Beetz & Partner Patentanwälte

(56) References cited:
- DE-A- 1 770 585
- GB-A- 1 239 272
- US-A- 3 959 350
- US-A- 4 111 906
- US-A- 4 196 277
- US-A- 4 477 648

## Description

This invention relates to the use of fluorine-containing polyimides which may be produced from polyamide acid derivatives as aligning layers for liquid crystal display devices.

US-A-4 203 922 discloses fluorinated diamines of the formula 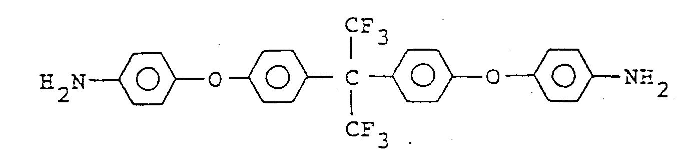
as starting materials for fluorine-containing polyimides.

J. Polym. Sci., A-1, vol 10, 1789-1807 (1972) relates to polyimides having repeating units of the formula: 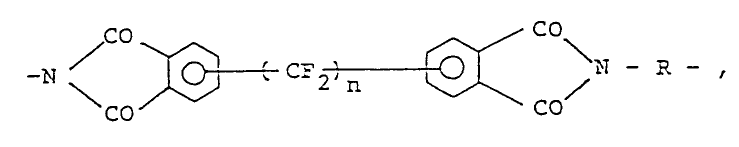
and US-A-3 959 350 discloses polyimides having repeating units of the formula: 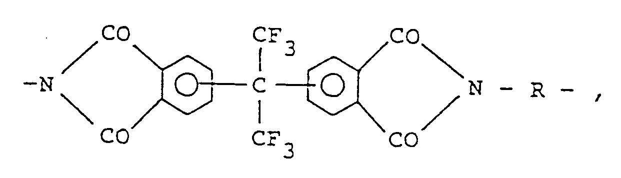
etc.

From US-A-4 196 277 similar polyimides having a repeating unit of the formula: 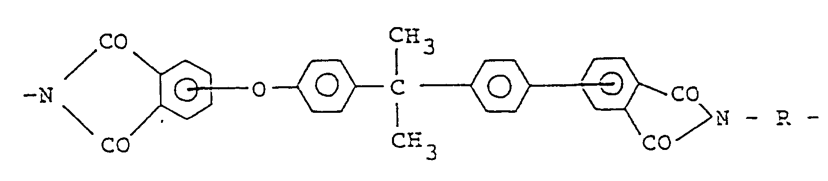
have been known which can be produced from the corresponding dianhydride of the formula:

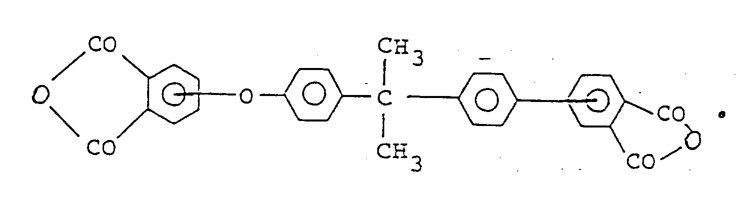

None of these publications discloses the use of fluorinated polyimides as materials for aligning layers of liquid crystal display devices.

It is the object of this invention to make available the use of fluorinated polyimides for aligning layers of liquid crystal display devices, and of corresponding polyamide acid derivatives as precursors thereof for the preparation of these polyimides.

The above object is achieved according to claims 1 and 6. The dependent claims relate to preferred embodiments.

The present invention teaches the use of polyimides comprising repeating units of the formula I 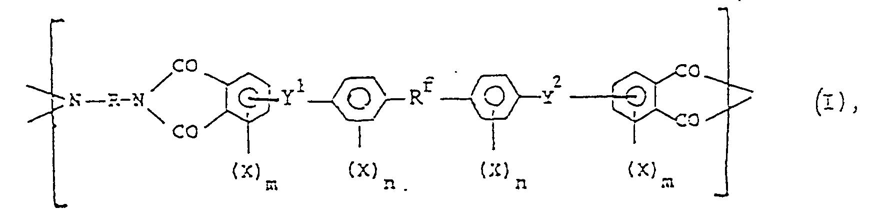
wherein are:
- R: a diamine residue obtained by removing the two amino groups from a diamine,
- X: each independently an alkyl group, a fluorinated alkyl group or a halogen atom,
- Y¹: -CO-O-,
- Y²: -O-CO-,
- R^{f}: a perfluoroalkylene group,
- m: 0, 1, 2 or 3,
and
- n: 0, 1, 2, 3 or 4,
as aligning layers of liquid crystal display devices.

The invention further teaches the use of polyamide acid derivatives comprising repeating units of the formula II, 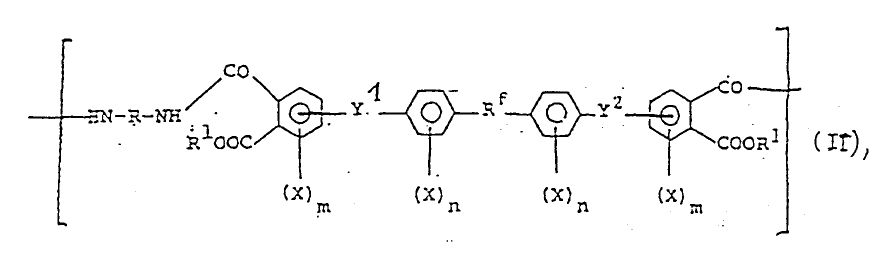
wherein R, X, Y¹, Y², R^{f}, m and n are as defined above, and R¹ is H or an alkyl group,
as intermediates for preparing the above-defined polyimides to be used as aligning layers for liquid crystal display devices.

The polyamide acid derivatives having repeating units of formula IV or of formulae IV and V, i.e. the precursors of the polyimides as used according to this invention, are remarkably excellent in solubility in a solvent compared with conventional low moisture absorption polyamide acids. That is, there is an advantage in that the polyamide acid derivatives can be dissolved in polar solvents, such as N-methyl-2-pyrrolidone (NMP), dimethylacetamide (DMAC), dimethyl sulfoxide (DMSO), dimethylformamide (DMF) and sulfolane, or mixtures of polar solvents and general purpose solvents, such as tetrahydrofuran, butyrolactone, cyclohexanone, acetone, methyl ethyl ketone and diacetone alcohol, or in some cases, only in general-purpose solvents.

Sometimes, however, the good solubility is reduced after imidization, and sometimes the solvent resistance gets lost. In such a case, the following methods are effective:
(i) Introduction of pyrrolone rings 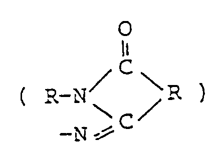 and/or isoindoloquinazolinedione rings 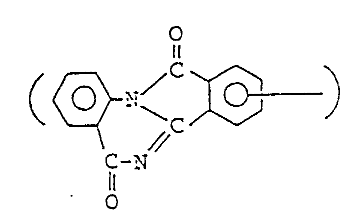 by modification with a compound of the formula III, 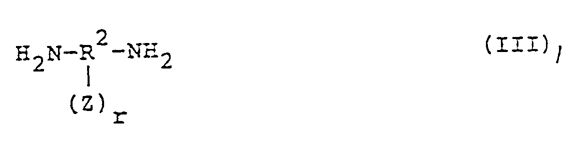 wherein R² is an aromatic group having a valence of 2+r, Z is a group selected from -NH₂, -CONH₂ and -SO₂NH₂ and is positioned in an ortho position to an amino group, and r is an integer of 1 or 2.
(ii) Final formation of a crosslinked structure by modification with an amine having a polymerizable unsaturated carbon-carbon bond, a diamine, a dicarboxylic acid, a tricarboxylic acid, a tetracarboxylic acid or a derivative of these compounds. Examples of the unsaturated compounds are maleic acid, nadic acid, tetrahydrophthalic anhydride and ethynyl aniline.
(iii) Final formation of a crosslinked structure by modification with an aromatic amine having a phenolic hydroxy group or a carboxy group. The modification (i) is more preferable.

The use of the above-mentioned modified polyamide acids is also included in the concept of this invention. Therefore, the use of polyimides obtained from these modified polyamide acids is also included in the present invention.

According to a preferred embodiment, compounds of the above-mentioned formulae I and II are used wherein 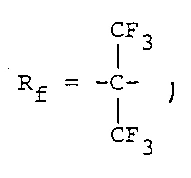
and at least one X is -CF₃.

The fundamental skeleton of the compounds used according to this invention, may easily be formed by reaction of a corresponding diamine with a tetracarboxylic acid derivative.

As the tetracarboxylic acid derivative, there can be used the following compounds, which are described in the form of free acids, but needless to say, dianhydrides, halides and esters of these acids may also be used.

Examples of tetracarboxylic acids for producing the units of formulae I and II are the following.
2,2-Bis[4-(3,4-dicarboxybenzoyloxy)-phenyl]hexafluoropropane,
2,2-bis[4-(2,3-dicarboxybenzoyloxy)-phenyl]hexafluoropropane,
2,2-bis[4-(3,4-dicarboxybenzoyloxy)-3-bromophenyl]hexafluoropropane,
2,2-bis[4-(3,4-dicarboxybenzoyloxy)-3,5-dibromophenyl]hexafluoropropane,
2,2-bis[4-(3,4-dicarboxybenzoyloxy)-3,5-dimethylphenyl]hexafluoropropane,
2,2-bis[4-(3,4-dicarboxybenzoyloxy)-3,5-bis-(trifluoromethyl)-phenyl]hexafluoropropane,
2,2-bis[4-(3,4-dicarboxybenzoyloxy)-phenyl]octafluorobutane,
2,2-bis[4-(2-trifluoromethyl-3,4-dicarboxybenzoyloxy)-phenyl]hexafluoropropane,
1,3-bis[4-(3,4-dicarboxybenzoyloxy)-phenyl]-hexafluoropropane,
1,5-bis[4-(3,4-dicarboxybenzoyloxy)-phenyl]decafluoropentane,
1,6-bis[4-(3,4-dicarboxybenzoyloxy)-phenyl]dodecafluorohexane,
1,7-bis[4-(3,4-dicarboxybenzoyloxy)-phenyl]tetradecafluoroheptane,
1,5-bis[4-(3,4-dicarboxybenzoyloxy)-3,5-dibromophenyl]decafluoropentane,
1,5-bis[4-(3,4-dicarboxybenzoyloxy)-3,5-bistrifluoromethylphenyl]decafluoropentane, and
1,5-bis[4-(2-trifluoromethyl-3,5-dicarboxybenzoyloxy)-phenyl]decafluoropentane.

These tetracarboxylic acid derivatives can be used alone or in the form of mixtures thereof.

Among these tetracarboxylic acid derivatives, 2,2-bis[4-(3,4-dicarboxybenzoyloxy)-phenyl]hexafluoropropane dianhydride (DCBFP) is preferable.

The polyimides consisting of repeating units of formula I or of formulae I and II can easily be obtained by imidization of the polyamide acids having repeating units of formula IV or of formulae IV and V, respectively.

Another method for producing the polyimides is to previously produce a biterminal bisphenol compound from a trimellitic acid derivative with a diamine, and to conduct esterification with the remaining acid derivative group with a bisphenol compound or a derivative thereof. For example, the desired polymer can be produced by reaction of trimellitic anhydride with a diamine to give a bisimide, and esterification with a lower alcohol, followed by transesterification with hexafluorobisphenol A.

In this invention, there can also be co-used tetracarboxylic acid derivatives, such as pyromellitic acid, 3,3',4,4'-biphenyl tetracarboxylic acid, 2,3,3',4'-biphenyl tetracarboxylic acid, 3,3',4,4'-diphenyl ether tetracarboxylic acid, 2,3,3',4'- diphenyl ether tetracarboxylic acid, 3,3',4,4'-benzophenone tetracarboxylic acid, 2,3,3',4'-benzophenone tetracarboxylic acid, 2,3,6,7-naphthalene tetracarboxylic acid, 1,4,5,8-naphthalene tetracarboxylic acid, 1,2,5,6-naphthalene tetracarboxylic acid, 3,3',4,4'-diphenylmethane tetracarboxylic acid, 2,2-bis(3,4-dicarboxyphenyl)propane, 2,2-bis(3,4-dicarboxyphenyl)hexafluoropropane, 3,3',4,4'-diphenylsulfone tetracarboxylic acid, 3,4,9,10-perylene tetracarboxylic acid, 2,2-bis[4-3,4-dicarboxyphenoxy)-phenyl]-propane, or acid dianhydrides thereof, or products partially esterified with a lower alcohol.

The co-use of aliphatic tetracarboxylic acids, such as butanetetracarboxylic acid or cyclopentanetetracarboxylic acid, is also possible.

Examples of diamines are m-phenylenediamine, p-phenylenediamine, benzidine, 4,4''-diaminoterphenyl, 4,4'''-diaminoquaterphenyl, 4,4'-diaminodiphenyl ether, 4,4'-aminodiphenylmethane, 4,4'-diaminodiphenyl sulfone, 2,2-bis(p-aminophenyl)propane, 1,5-diaminonaphthalene, 2,6-diaminonaphthalene, 3,3'-dimethylbenzidine, 3,3'-dimethoxybenzidine, 3,3'-dimethyl-4,4'-diaminodiphenylether, 3,3'-dimethyl-4,4'-diaminodiphenylmethane, 1,4-bis(p-aminophenoxy)benzene, 4,4'-bis(p-aminophenoxy)-biphenyl, 2,2-bis[4-(p-aminophenoxy)-phenyl]propane, 2,2-bis(p-aminophenyl)hexafluoropropane, diamines represented by the formula VI 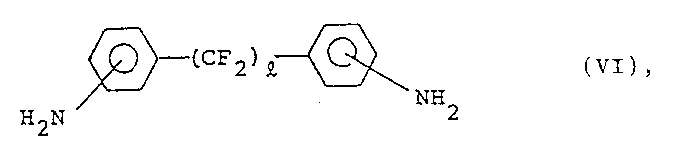
wherein l is an integer of 1 to 6,
such as 2,2-bis(aminophenyl)hexafluoropropane, and 2,3,5,6-tetramethyl-p-phenylenediamine.

These diamines can be used alone or in the form of mixtures thereof.

Among these diamines, those having one or more CF₃ groups, particularly 2,2-bis[4-(4-aminophenoxy)-phenyl]hexafluoropropane (DAPEP) and 2,2-bis[4-(3-trifluoromethyl-4-aminophenoxy)-phenyl]hexafluoropropane (DAFPEP), are more preferable.

In order to improve adhesiveness to glass, ceramics, metals, it is possible to use silicon-containing diamines represented by the formualae: 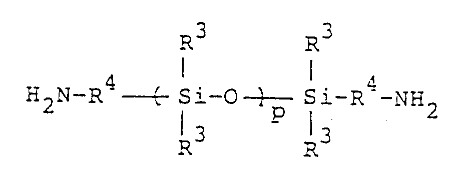
and 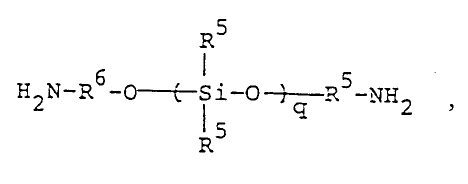
wherein R⁴ and R⁶ are independently a divalent organic group, such as ethylene, propylene and phenylene, R³ and R⁵ are independently a monovalent organic group, such as methyl, ethyl, propyl and phenyl, and p and q are integers larger than 1,
or fluorine-containing aromatic diamines such as
2,2-bis[4-(4-aminophenoxy)-phenyl]hexafluoropropane,
2,2-bis[4-(3-aminophenoxy)-phenyl]hexafluoropropane,
2,2-bis[4-(2-aminophenoxy)-phenyl]hexafluoropropane,
2,2-bis[4-(2-aminophenoxy)-3,5-dimethylphenyl]hexafluoropropane,
p-bis(4-amino-2-trifluoromethylphenoxy)benzene,
4,4'-bis(4-amino-2-trifluoromethylphenoxy)biphenyl,
4,4'-bis(4-amino-3-trifluoromethylphenoxy)biphenyl,
4,4'-bis(4-amino-2-trifluoromethylphenoxy)diphenyl sulfone,
4,4'-bis(3-amino-5-trifluoromethylphenoxy)diphenyl sulfone,
and
2,2-bis[4-(4-amino-2-trifluoromethylphenoxy)-phenyl]hexafluoropropane.

The polyamide acids can be obtained by polycondensation of one or more aromatic aminodicarboxylic acid derivatives or by reaction of one or more aromatic diamines or aromatic diisocyanates with one or more aromatic tetracarboxylic acid derivatives, the latter being used in an amount of 0.9 to 1.1 moles per mole of the former, preferably in a molar ratio of 1:1. As the tetracarboxylic acid derivatives, there can be used for example esters, acid anhydrides and acid chlorides. The use of acid anhydrides is more preferable from the viewpoint of production. The synthesis reactions can usually be carried out in a solvent, such as N-methyl-2-pyrrolidone (NMP), dimethylformamide (DMF), dimethylacetamide (DMAC), dimethyl sulfoxide (DMSO), dimethyl sulfate, sulfolane, butyrolactone, cresol, phenol, halogenated phenols, cyclohexanone, dioxane, or mixtures thereof, at a temperature of 0 to 200 °C. In such a case, polyimides may partially be formed in the reaction solution.

The polyimides can be produced by conventional methods from the corresponding polyamide acids.

The preparation and characterization of polyamide acids and polyimides as used according to the present invention are illustrated by way of the following Examples.

The abbreviations of compounds used in the Examples are as follows:
- BPDA:: Biphenyl-3,3',4,4'-tetracarboxylic dianhydride
- BTPF5:: 1,5-bis[4-(3,4-dicarboxybenzoyloxy)-phenyl]-decafluoropentane
- DAFPFP:: 2,2-bis[4-(3-trifluoromethyl-4-aminophenoxy)-phenyl]-hexafluoropropane
- DAPFP:: 2,2-bis[4-(4-aminophenoxy)-phenyl]-hexafluoropropane
- DCBFP:: 2,2-bis[4-(3,4-dicarboxybenzoyloxy)-phenyl]-hexafluoropropane dianhydride
- DCFBFP:: 2,2-bis[4-(5-trifluoromethyl-3,4-dicarboxybenzoyloxy)phenyl]-hexafluoropropane
- DDE:: 4,4'-diaminodiphenyl ether
- NMP:: N-methyl-2-pyrrolidone
- PDA:: p-phenylenediamine.

### EXAMPLE 1

In a four-necked flask equipped with a stirrer, a reflux condenser, a thermometer and a nitrogen introducing tube, 2.05 g of PDA was dissolved in 85 g of NMP. Then, the flask was dipped in a water bath at 20 °C, and 12.95 g of DCBFP was added gradually while controlling the exothermic heat. After dissolution of the DCBFP, the water bath was removed, and the reaction was continued at about room temperature for about 5 h. The viscosity of the product was 25 Pa·s (250 P) at 25 °C.

The resulting polyamide acid had repeating units of the formula:

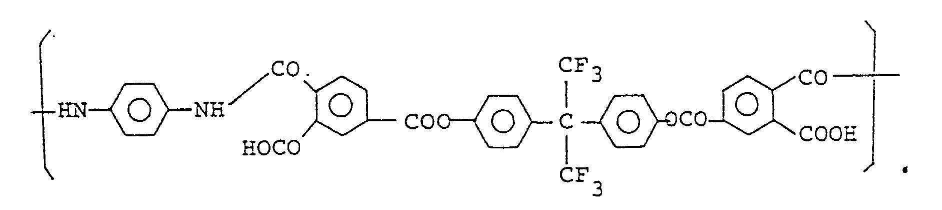

The viscosity of the varnish having 15 % solid content was 33 Pa·s (330 P) at 25 °C.

The polyamic acid solution was coated on a glass plate and imidized in nitrogen at 150 °C for 1 h, at 250 °C for 0.5 h, and at 400 °C for 1 h to give a polyimide film having repeating units of the formula:

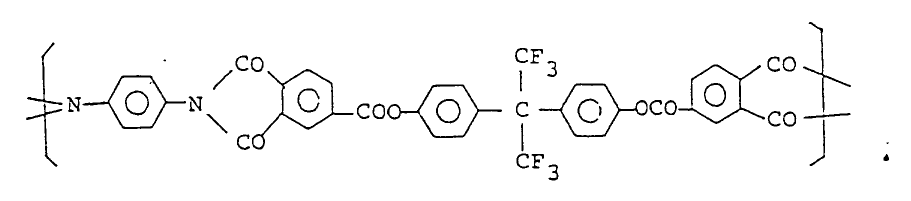

The film was tough (not brittle) and showed a moisture absorption (saturation) of 0.75 % (25 °C, 75 % RH).

Then, the pyrolysis temperature was measured by using a precision thermebalance. A sample was rapidly heated to 350 °C at a rate of 200 °C/min under a nitrogen atmosphere, dried at that temperature for 15 min and heated at a rate of 200 °C/min to a predetermined temperature, whereupon the weight loss with the lapse of time was measured at constant temperature. At least three weight loss curves for different pyrolysis temperatures were obtained, and the temperature necessary for a weight loss of 3 % in 100 min was obtained by an Arrhenius plot. This temperature was defined as pyrolysis temperature. The time necessary for a weight loss of the film of 3 % in nitrogen was 9 min at 500 °C, 21 min at 490 °C, 46 min at 475 °C, and 200 min at 450 °C. Therefore, the pyrolysis temperature in nitrogen was 470 °C. In the case of an air atmosphere, the time was 20 min at 475 °C, 85 min at 450 °C, 120 min at 440 °C and 220 min at 425 °C. Therefore, the pyrolysis temperature in air was 450 °C.

As mentioned above, the polyimide thus obtained was excellent both in low moisture absorption properties and heat resistance.

### EXAMPLE 2

A polyamide acid varnish was prepared in the same manner as described in Example 1 using the following formulation:

| | |
|---|---|
| DDE | 3.40 g |
| DCBFP | 11.60 g |
| NMP | 85 g. |

The resulting polyamide acid had repeating units of the formula:

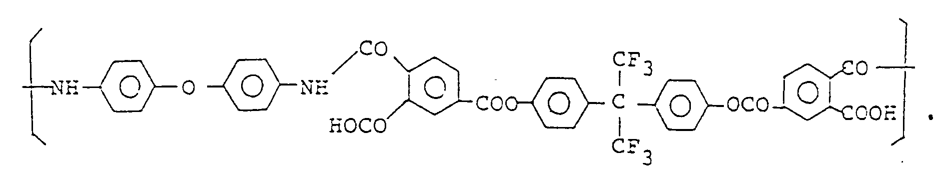

The viscosity of the solution was 5 Pa·s (50 P) at 25 °C.

From this varnish, there was obtained in the same manner as described in Example 1 a tough polyimide film having repeating units of the formula:

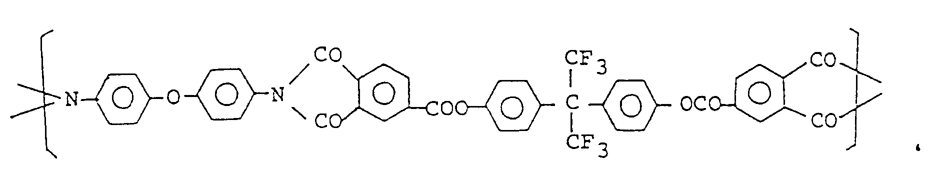

The imidization conditions were 150 °C/1 h + 350 °C/0.5 h under a nitrogen atmosphere.

The polyimide film was subject to measurement of the moisture absorption and the pyrolysis temperature.

The moisture absorption was 0.65 % (25 °C, 75 % RH), and the pyrolysis temperature was 435 °C in air and 455 °C in nitrogen.

### EXAMPLE 3

A polyamide acid varnish was prepared in the same manner as described in Example 1 using the following formulation:

| | |
|---|---|
| DAPFP | 6.46 g |
| DCBFP | 8.54 g |
| NMP | 85 g. |

The resulting polyamide acid had repeating units of the formula: 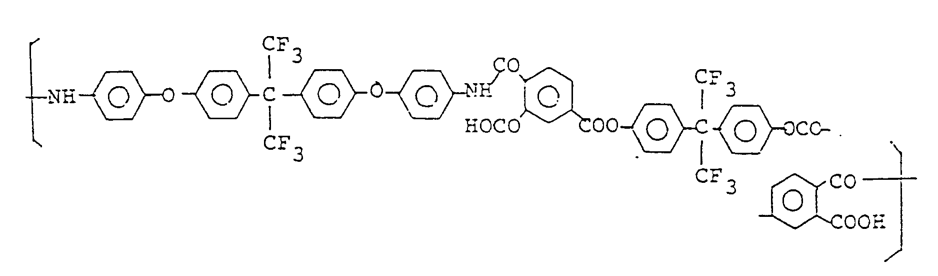
The viscosity of the varnish was 1.3 Pa·s (13 P) at 25 °C.

From this varnish, there was obtained in the same manner as described in Example 1 a tough polyimide film having repeating units of the formula:

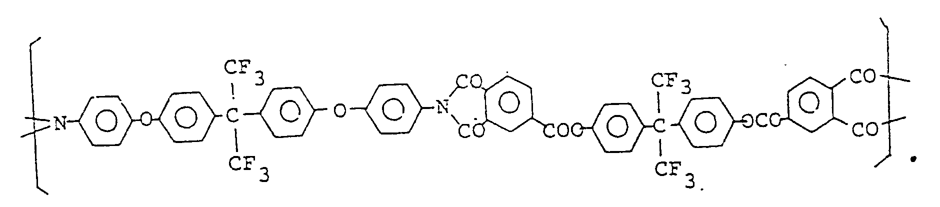

The imidization conditions were 150 °C/1 h + 350 °C/0,5 h under a nitrogen atmosphere.

The polyimide film was subjected to measurement of the moisture absorption and the pyrolysis temperature.

The moisture absorption was 0.45 % (25 °C, 75 % RH), and the pyrolysis temperature was 430 °C in air and 450 °C in nitrogen.

### EXAMPLE 4

A polyamide acid varnish was prepared in the same manner as described in Example 1 using the following formulation:

| | |
|---|---|
| DAPFP | 5.81 g |
| DCFBFP | 9.19 g |
| NMP | 85 g. |

The resulting polyamide acid had repeating units of the formula:

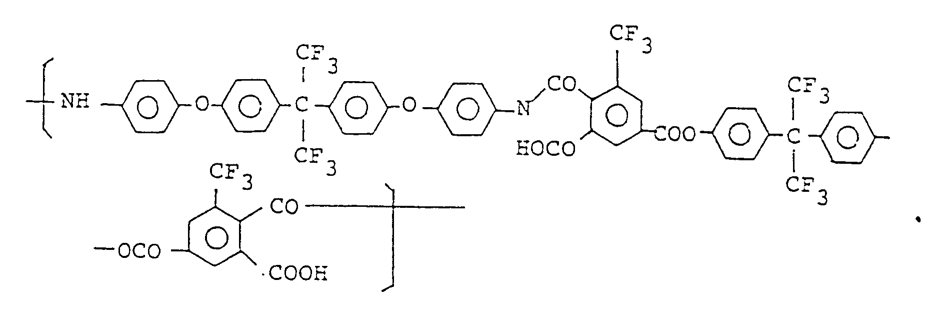

The viscosity of the varnish was 1.3 Pa·s (13 P) at 25 °C.

From this varnish, there was obtained in the same manner as described in Example 1 a polyimide film having repeating units of the formula:

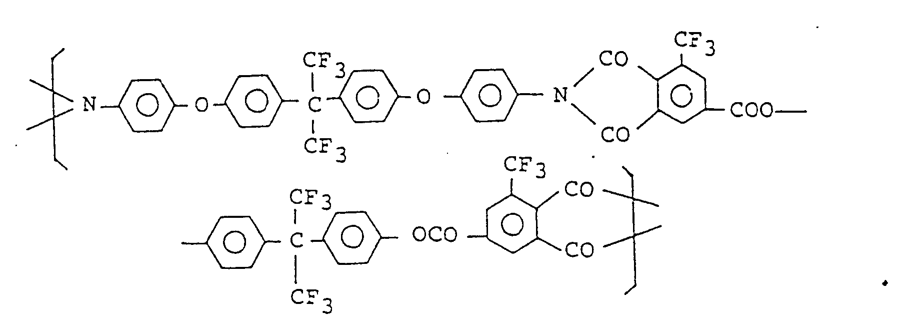

The imidization conditions were 150 °C/1 h + 350 °C/0.5 h under a nitrogen atmosphere.

The polyimide film was subjected to measurement of the moisture absorption and the pyrolysis temperature.

The moisture absorption was 0.4 % (25 °C, 75 % RH), and the pyrolysis temperature was 430 °C in air and 440 °C in nitrogen.

### EXAMPLE 5

A polyamide acid varnish was prepared in the same manner as described in Example 1 using the following formulation:

| | |
|---|---|
| DAPFP | 5.97 g |
| BTPF5 | 9.03 g |
| NMP | 85 g. |

The resulting polyamide acid had repeating units of the formula:

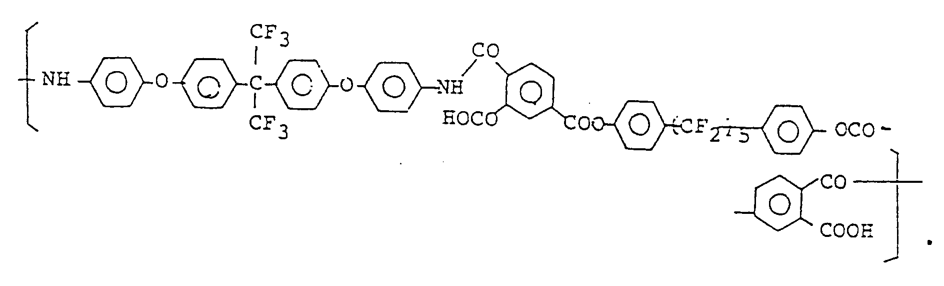

The viscosity of the varnish was 1.5 Pa·s (15 P) at 25 °C.

From this varnish, there was obtained in the same manner as described in Example 1 a polyimide film having repeating units of the formula:

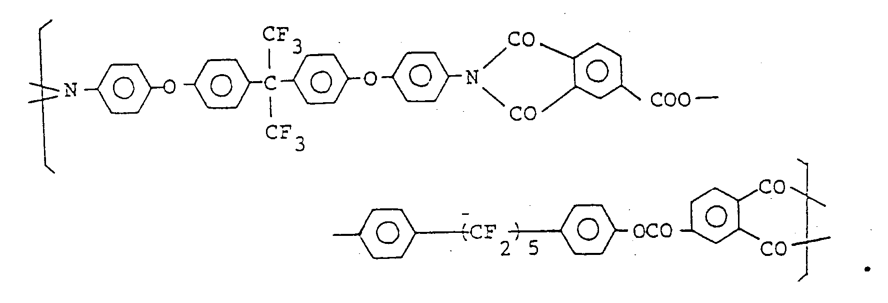

The imidization conditions were 150 °C/1 h + 350 °C/0.5 h under a nitrogen atmosphere.

The polyimide film was subjected to measurement of the moisture absorption and the pyrolysis temperature.

The moisture absorption was 0.4 % (25 °C, 75 % RH), and the pyrolysis temperature was 420 °C in air and 430 °C in nitrogen.

### EXAMPLE 6

A polyamide acid varnish was prepared in the same manner as described in Example 1 using the following formulation:

| | |
|---|---|
| DAFPFP | 7.33 g |
| DCBFP | 7.67 g |
| NMP | 85 g. |

The resulting polyamide acid had repeating units of the formula:

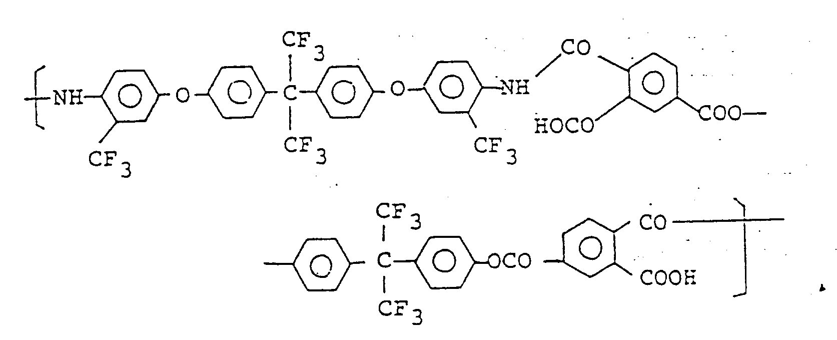

The viscosity of the varnish was 0.15 Pa·s (1.5 P) at 25 °C.

From this varnish, there was obtained in the same manner as described in Example 1 a polyimide film (slightly brittle) having repeating units of the formula:

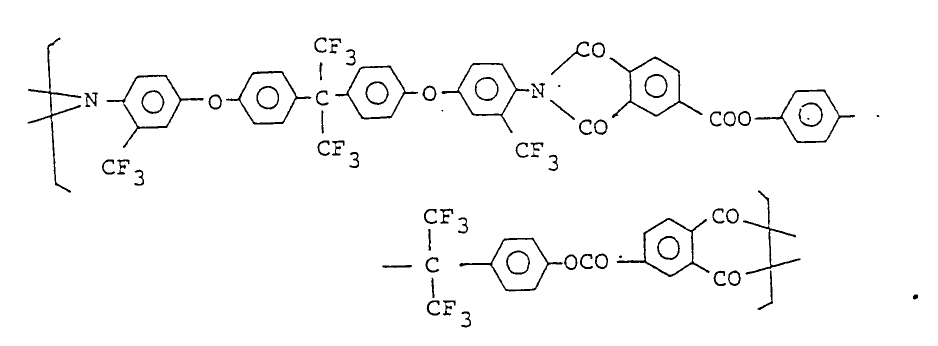

The imidization conditions were 150 °C/1 h + 350 °C/0.5 h under a nitrogen atmosphere.

The polyimide film was subjected to measurement of the moisture absorption and the pyrolysis temperature.

The moisture absorption was 0.4 % (25 °C, 75 % RH), and the pyrolysis temperature was 430 °C in air and 440 °C in nitrogen.

### EXAMPLE 7

A polyamide acid varnish was prepared in the same manner as described in Example 1 using the following formulation:

| | |
|---|---|
| DAFPFP | 8.02 g |
| DPDA | 1.08 g |
| DCBFP | 5.88 g |
| NMP | 85 g. |

The resulting polyamide acid had repeating units of the formula: 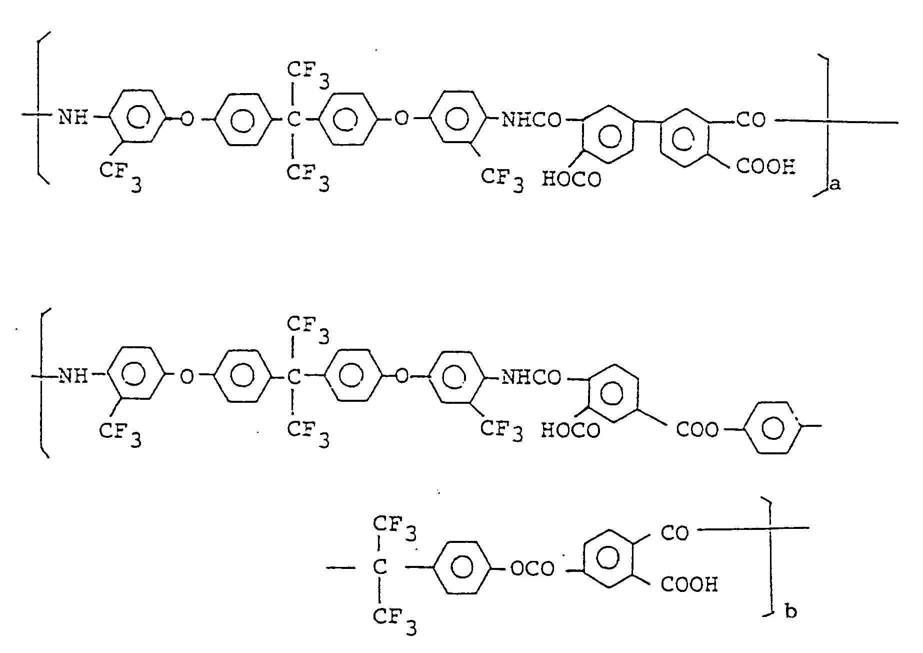
wherein a and b are positive integers and a:b = 3:7 (molar ratio).

The viscosity of the varnish was 0.5 Pa·s (5 P) at 25 °C.

From this varnish, there was obtained in the same manner as described in Example 1 a tough polyimide film having repeating units of the formula: 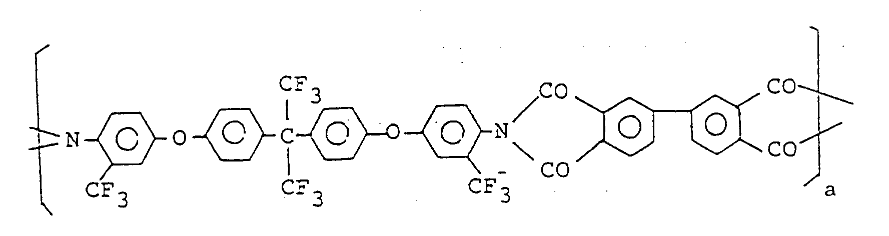 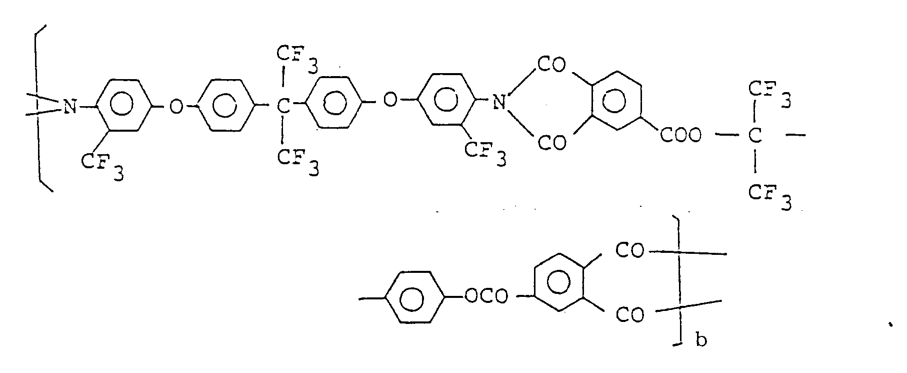
(a:b = 3:7, as molar ratio).

The imidization conditions were 150 °C/1 h + 350 °C/0.5 h under a nitrogen atmosphere.

The polyimide film was subjected to measurement of the moisture absorption and the pyrolysis temperature.

The moisture absorption was 0.4 % (25 °C, 75 % RH), and the pyrolysis temperature was 430 °C in air and 440 °C in nitrogen.

### EXAMPLE 8

A polyamide acid varnish was prepared in the same manner as described in Example 1 using the following formulation:

| | |
|---|---|
| DAFPFP | 8.58 g |
| BPDA | 1.93 g |
| DCBFP | 4.49 g |
| NMP | 85 g. |

The resulting polyamide acid had the same repeating units as in Example 7 but with a:b = 5:5. The viscosity of the varnish was 0.45 Pa·s (4.5 P) at 25 °C.

From this varnish, there was obtained in the same manner as described in Example 1 a tough polyimide film having the same repeating units as in Example 7 but with a:b = 5:5.

The imidization conditions were 150 °C/1 h + 350 °C/0.5 h under a nitrogen atmosphere.

The polyimide film was subjected to measurement of the moisture absorption and the pyrolysis temperature.

The moisture absorption was 0.45 % (25 °C, 75 % RH), and the pyrolysis temperature was 440 °C in air and 450 °C in nitrogen.

## Claims

1. Use of polyimides comprising repeating units of the formula I, 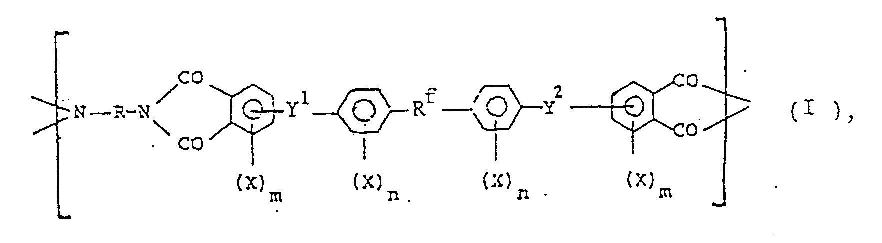 wherein are:
R a diamine residue obtained by removing the two amino groups from a diamine,
X each independently an alkyl group, a fluorinated alkyl group or a halogen atom,
Y¹ -CO-O-,
Y² -O-CO-,
R^{f} a perfluoroalkylene group,
m 0, 1, 2 or 3,
and
n 0, 1, 2, 3 or 4,
as aligning layers of liquid crystal display devices.

2. Use of polyimides of formula I according to claim 1, wherein
R^{f} is 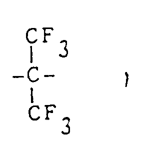 and at least one X is CF₃.

3. Use of polyimides according to claim 1 or 2, wherein the diamine residue R is derived from 2,2-bis[4-(4-aminophenoxy)-phenyl]-hexafluoropropane, 2,2-bis[4-(3-trifluoromethyl-4-aminophenoxy)-phenyl]-hexafluoropropane or a mixture of at least one of the above-mentioned diamines and another aromatic diamine.

4. Use of polyimides according to one of claims 1 to 3, wherein the tetracarboxylic acid derivative part of the units of formula I is derived from 2,2-bis[4-(3,4-dicarboxybenzoyloxy)-phenyl]-hexafluoropropane dianhydride, or a mixture of this tetracarboxylic acid derivative and another aromatic tetracarboxylic acid derivative.

5. Use of polyimides according to one of claims 1 to 4 which further include pyrrolone rings and/or isoindoloquinazolinedione rings.

6. Use of polyamide acid derivatives comprising repeating units of the formula II, 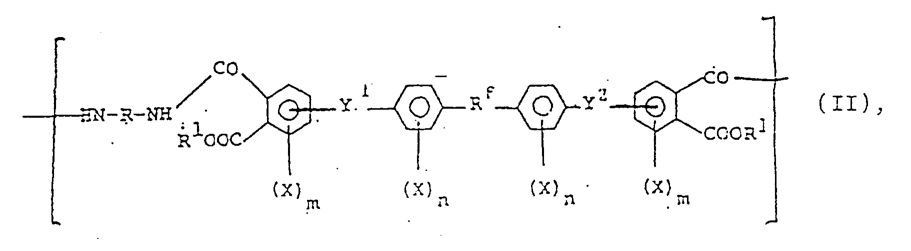 wherein R, X, Y¹, Y², R^{f}, m and n are defined as in claim 1, and R¹ is H or an alkyl group,
as intermediates for preparing polyimides to be used as aligning layers for liquid crystal display devices in accordance with one of claims 1 to 5.

## Patentansprüche

1. Verwendung von Polyimiden, die wiederkehrende Einheiten der Formel I aufweisen, 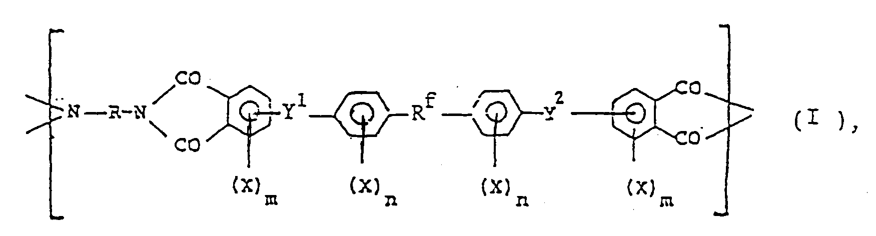 in der bedeuten:
R einen durch Entfernen der beiden Aminogruppen von einem Diamin erhaltenen Diaminrest,
X unabhängig eine Alkylgruppe, eine fluorierte Alkylgruppe oder ein Halogenatom,
Y¹ -CO-O-,
Y² -O-CO-,
R^{f} eine Perfluoralkylengruppe,
m 0, 1, 2 oder 3
und
n 0, 1, 2, 3 oder 4,
als Orientierungsschichten von Flüssigkristall-Anzeigevorrichtungen.

2. Verwendung von Polyimiden der Formel I nach Anspruch 1, in der 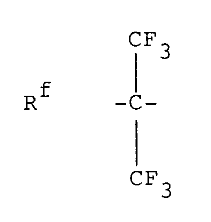 bedeutet und mindestens einer der Substituenten X CF₃ ist.

3. Verwendung von Polyimiden nach Anspruch 1 oder 2, wobei der Diaminrest R abgeleitet ist von 2,2-Bis[4-(4-aminophenoxy)-phenyl]-hexafluorpropan, 2,2-Bis[4-(3-trifluormethyl-4-aminophenoxy)-phenyl]-hexafluorpropan oder einem Gemisch von mindestens einem der oben angegebenen Diamine mit einem weiteren aromatischen Diamin.

4. Verwendung von Polyimiden nach einem der Ansprüche 1 bis 3, wobei der dem Tetracarbonsäurederivat der Einheiten der Formel I entsprechende Teil von 2,2-Bis[4-3,4-dicarboxybenzoyloxy)-phenyl]-hexafluorpropandianhydrid oder einem Gemisch dieses Tetracarbonsäurederivats mit einem anderen aromatischen Tetracarbonsäurederivat abgeleitet ist.

5. Verwendung von Polyimiden nach einem der Ansprüche 1 bis 4, die ferner Pyrrolon-Ringe und/oder Isoindolochinazolindion-Ringe enthalten.

6. Verwendung von Polyamidsäurederivaten, die wiederkehrende Einheiten der Formel II aufweisen, 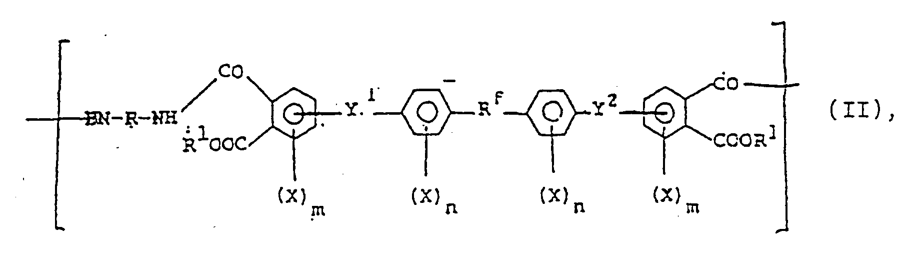 in der R, Y, Y¹, Y², R^{f}, m und n wie in Anspruch 1 definiert sind und R¹ H oder eine Alkylgruppe bedeutet,
als Zwischenprodukte zur Herstellung von Polyimiden, die zur Verwendung als Orientierungsschichten für Flüssigkristallanzeigevorrichtungen gemäß einem der Ansprüche 1 bis 5 vorgesehen sind.

## Revendications

1. Utilisation de polyimides comprenant des motifs répétés de formule I, 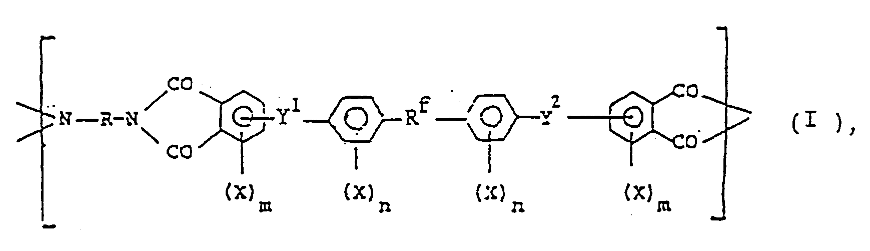 dans laquelle :
R représente un reste de diamine obtenu en enlevant les deux groupes amino d'une diamine,
X représente indépendamment un groupe alkyle, un groupe alkyle fluoré ou un atome d'halogène,
Y¹-CO-O-,
Y²-CO-O-,
R^{f} représente un groupe perfluoroalkylène,
m représente 0, 1, 2 ou 3,
et
n représente 0, 1, 2, 3 ou 4,
comme couches d'alignement de dispositifs d'affichage à cristaux liquides.

2. Utilisation de polyimides de formule I selon la revendication 1, où
R^{f} représente 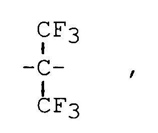 et au moins un des groupes X représente CF₃.

3. Utilisation de polyimides selon la revendication l ou 2, où le reste de diamine R est dérivé du 2,2-bis[4-(4-aminophénoxy)phényl]hexafluoropropane, du 2,2-bis[4-(3-trifluorométhyl-4-aminophénoxy)phényl]hexafluoropropane ou d'un mélange d'au moins une des diamines mentionnées ci-dessus et d'une autre diamine aromatique.

4. Utilisation de polyimides selon l'une quelconque des revendications 1 à 3, où la partie dérivée d'un acide tétracarboxylique des motifs de formule I est dérivée du dianhydride de 2,2-bis[4-(3,4-dicarboxybenzoyloxy)phényl]hexafluoropropane, ou d'un mélange de ce dérivé d'acide tétracarboxylique et d'un autre dérivé d'acide tétracarboxylique aromatique.

5. Utilisation de polyimides selon l'une quelconque des revendications 1 à 4, qui comprennent en outre des cycles pyrrolone et/ou des cycles isoindoloquinazolinedione.

6. Utilisation de dérivés d'acides polyamides comprenant des motifs répétés de formule II, 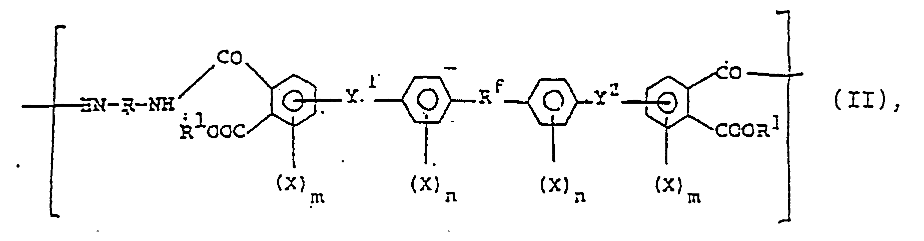 dans laquelle R, X, Y¹, Y^{2,} R^{f}, m et n sont tels que définis dans la revendication 1 et R¹ représente H ou un groupe alkyle,
comme intermédiaires pour la préparation de polyimides destinés à être utilisés comme couches d'alignement pour des dispositifs d'affichage à cristaux liquides selon l'une quelconque des revendications 1 à 5.
